# EUROPÄISCHE PATENTSCHRIFT

(11) **EP 0 507 082 B1**
(45) Veröffentlichungstag und Bekanntmachung des Hinweises auf die Patenterteilung: **10.05.1995**
(21) Anmeldenummer: 92103339.5
(22) Anmeldetag: 27.02.1992
(51) Int. Cl.: B60N 3/02

(54) **Haltegriff für Fahrzeuge**
Handgrip for vehicles
Poignée pour véhicules

(30) Priorität: 04.04.1991 DE 4110822
(43) Veröffentlichungstag der Anmeldung: 07.10.1992
(73) Patentinhaber: Gebr. Happich GmbH, D-42097 Wuppertal (DE)
(72) Erfinder: Dietz, Günter, W-5600 Wuppertal 1 (DE); Kaiser, Klaus Peter, W-5632 Wermelskirchen (DE)

(56) Entgegenhaltungen:
- EP-A- 0 356 919
- DE-A- 2 243 876
- DE-A- 3 018 060
- DE-A- 3 413 183
- DE-A- 3 513 293
- US-A- 4 639 147

## Beschreibung

Die Erfindung bezieht sich auf einen Haltegriff für Fahrzeuge, bestehend aus einem U-förmig ausgebildeten Griffkörper, der einen Steg und zwei Schenkel umfaßt und an den freien Schenkelenden daran mittels Lagerachsen angelenkte Lagerböcke trägt, die an einer Fahrzeugkarosserie, im Übergangsbereich zwischen dem Dach und einer Seitenwand befestigbar sind, wobei der Griffkörper aus einer eng an einer Befestigungsfläche anliegenden Nichtgebrauchslage gegen die Kraft einer Rückstellfeder in eine von der Befestigungsfläche abstehende Gebrauchslage schwenkbar ist und Mittel zur Verhinderung eines schlagartigen Bewegungsablaufs bei der Rückstellbewegung des Griffkörpers vorgesehen sind.

Beim Gegenstand der DE-A 35 13 293, von dem die vorliegende Erfindung ausgeht, ist bei einem Haltegriff der gattungsgemäßen Art zur Verhinderung eines schlagartigen Bewegungsablaufs bei der Rückstellbewegung des Griffkörpers ein hydraulischer Flügelstoßdämpfer vorgesehen. Bei dem bekannten Haltegriff, der nicht bis zur Serienreife entwickelt werden konnte, hat sich gezeigt, daß die Einrichtung in Form eines Flügelstoßdämpfers den technischen Anforderungen nicht gerecht werden konnte. Die bekannte Einrichtung hat sich einerseits als noch zu aufwendig in der Herstellung und Montage und andererseits insbesondere auch als störanfällig im praktischen Gebrauch erwiesen. Damit konnte bisher die Forderung der Abnehmerschaft, einen Haltegriff zur Verfügung zu stellen, der bei der Rückstellbewegung keine Anschlaggeräusche nach Art einer zuschnappenden Mäusefalle verursacht, noch nicht erfüllt werden.

Der Erfindung liegt nun ausgehend von einem Haltegriff der eingangs genannten Art die Aufgabe zugrunde, Vorsorge dafür zu treffen, daß unangenehme Anschlaggeräusche bei der Rückstellbewegung des Griffkörpers vermieden werden und hierfür ein Mittel vorzusehen, das weder aufwendig in der Herstellung oder Montage noch störanfällig im Gebrauch ist.

Die Erfindung löst diese Aufgabe dadurch, daß der Haltegriff zum Abbremsen der Rückstellbewegung des Griffkörpers mit zumindest einer Reibungsbremse ausgerüstet ist, die aus einem gegenüber der Lagerachse verdrehfest angeordneten Formkörper aus verschließfestem, zähelastischen Kunststoffmaterial besteht, welcher eine Bohrung zur Aufnahme eines axialen Bereichs einer der Lagerachsen aufweist, deren Durchmesser Kleiner als der Durchmesser der Lagerachse ausgeführt ist, jedoch eine Relativbewegung zwischen Formkörper und Lagerachse zuläßt.

Eine Reibungsbremse, die aus einem Kunststofformkörper besteht, ist verständlicherweise relativ einfach und kostengünstig herzustellen, selbst dann, wenn ein hochwertiges, verschleißarmes Material zum Einsatz gelangt. Eine solche Reibungsbremse weist zudem den wesentlichen Vorteil auf, daß sie auf Dauer völlig wartungs- und störungsfrei zu arbeiten vermag. Die Montage ist völlig problemlos, weil hierfür lediglich ein Zusammenstecken von Lagerachse und Kunststofformkörper nach Art einer Preßpassung vorzunehmen ist. Die Bremskraft wirkt permanent und stets gleichmäßig, so daß durch wenige Versuche schnell und einfach ermittelt werden kann, um wieviel kleiner die Bohrung im Formkörper gegenüber dem Achsdurchmesser auszuführen ist. Durch bloße Anpassung der Durchmesser von Bohrung und Achse kann eine dem jeweiligen Einsatzzweck entsprechende Abstimmung erzielt werden. Eine Änderung der üblicherweise zum Einsatz kommenden Rückstellfedern ist nicht erforderlich, denn die Federkraft ist ohnehin größer als nötig gewählt, um eine Rückstellbewegung des Griffkörpers auch bei relativ großen Toleranzen sicherzustellen. Diese funktionsbedingt größere Federkraft führt ja gerade zu oftmals starken Anschlaggeräuschen, die durch die Erfindung nunmehr vermieden werden.

Für die Herstellung des Formkörpers eignet sich ein verschleißfestes Kunststoffmaterial mit z.B. kautschukartigen Eigenschaften. Hier durchgeführte Versuche mit TPE (thermoplastisches Polyesterelastomer) zeigten - auch bei Dauerversuchen - hervorragende Ergebnisse. Nur als Beispiel sei hier ein von uns mit Erfolg getestetes Material mit dem Markennamen Hytrel welches von der Firma Du Pont vertrieben wird, erwähnt.

Der Formkörper ist zweckmäßigerweise verdrehfest an einem der Lagerböcke oder an einer diese miteinander verbindenden Profilschiene angeordnet, während die mit dem Formkörper zusammenwirkende Lagerachse verdrehfest am Griffkörper sitzt. Dabei wird aber darauf hingewiesen, daß es nur wesentlich ist, daß sich die Lagerachse im Formkörper bzw der Formkörper um die Lagerachse zu drehen vermag.

Gemäß einer Ausgestaltung der Erfindung ist vorgesehen, daß die jeweils mit einem Formkörper zusammenwirkenden Lagerachsen eine glatte, korrosionsgeschützte Oberfläche aufweisen. Damit wird über die gesamte Gebrauchsdauer des Haltegriffs eine stets gleichbleibende Bremswirkung erzielt. Die Lagerachsen können z.B. aus rostfreiem Stanl bestehen oder z.B. auch mit einer Chromschicht od. dgl. überzogen sein.

Die Erfindung wird nachfolgend anhand eines auf der Zeichnung dargestellten Ausführungsbeispiels näher erläutert. Es zeigen:
- Fig. 1: einen Haltegriff in Ansicht,
- Fig. 2: einen Schnitt II - II nach Fig 1 und
- Fig. 3: einen Schnitt III - III nach Fig. 1.

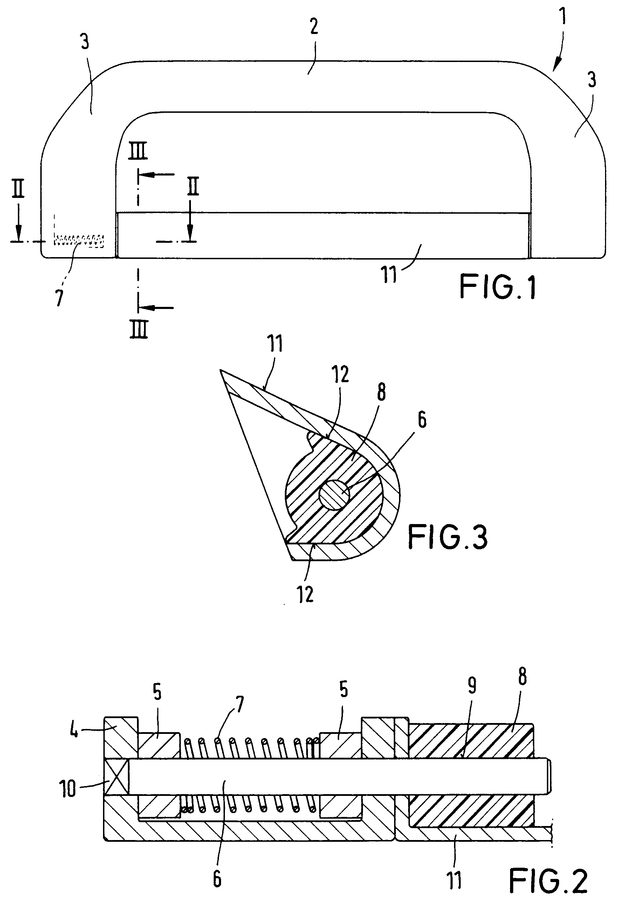

Der neue Haltegriff besteht aus dem U-förmigen Griffbügel 1 mit einem Steg 2 und zwei Schenkeln 3. An den freien Schenkelenden 4 sind Lagerböcke 5, von denen Fig. 2 nur den linksseitigen zeigt, mittels jeweils einer Lagerachse 6 angelenkt. Die Lagerböcke 5 sind in üblicher und daher nicht näher dargestellter Weise an einer Fahrzeugkarosserie zu befestigen. Der Griffbügel 1 wird durch eine Rückstellfeder 7 in der Nichtgebrauchslage gehalten bzw. aus der Gebrauchslage in die Nichtgebrauchslage zurückgeführt.

Damit die Rückstellbewegung nicht mit einem harten Anschlaggeräusch endet, ist der neue Haltegriff mit einer Reibungsbremse ausgerüstet. Diese besteht aus einem Formkörper 8 aus verschleißfestem, zähelastischem Kunststoffmaterial, vorzugsweise TPE. Der Formkörper 8 weist eine Bohrung 9 zur Aufnahme eines axialen Bereichs der Lagerachse 6 auf. Der Öffnungsquerschnitt der Bohrung 9 ist kleiner als der Querschnitt der Lagerachse 6, so daß die Lagerachse 6 nach Art einer Preßpassung in der Bohrung 9 sitzt. Diese Preßpassung ist allerdings so gewählt, daß noch eine Relativbewegung zwischen dem Formkörper 8 und der Lagerachse 6 möglich ist, mit anderen Worten: Die Reibungskraft des Formkörpers 8 auf der Lagerachse ist einerseits so klein, daß die Rückstellfeder 7 den Griffbügel wieder in die Nichtgebrauchslage zurückführen kann, andererseits aber doch so groß, daß es dabei nicht mehr zu lauten Anschlaggeräuschen kommen kann.

Im Ausführungsbeispiel ist die Lagerachse 6 durch eine formschlüssige Verbindung 10 verdrehfest am Griffbügel 1 festgelegt, während der Formkörper 8 verdrehfest in einem Lagerbock 5 bzw. in einer die Lagerböcke 5 miteinander verbindenden Profilschiene 11 sitzt. Aus Fig. 3 ist ersichtlich, daß der Formkörper 8 im Querschnitt unrund ausgebildet ist und sich mit Anschlagflächen 12 gegen entsprechende Gegenflächen der Profilschiene abstützt.

Wird nun der Griffbügel 1 aus seiner in Fig. 1 gezeigten Nichtgebrauchslage in die Gebrauchslage geschwenkt, so erfolgt dies gegen die Kraft der Rückstellfeder 7 und der Reibungskraft des Formkörpers 8. Diese Kräfte sind schon wegen der gegebenen Hebelverhältnisse von Hand mühelos zu überwinden. Nach dem Loslassen des Griffbügels 1 ist dieser zufolge der Kraft der Rückstellfeder bestrebt, wieder seine Nichtgebrauchslage einzunehmen. Der hierfür notwendige Bewegungshub läuft nunmehr, d. h. gegenüber dem Stand der Technik wegen des reibschlüssig auf der Lagerachse 6 sitzenden Formkörpers 8 verlangsamt ab, so daß die Endgeschwindigkeit, die der Griffbügel vor dem Auftreffen auf seine Anschlagflächen aufweist, sehr gering ist und es nicht zum harten Anschlag mit entsprechender Geräuschsentwicklung kommen kann.

Es versteht sich, daß von Fall zu Fall zu ermitteln ist, ob nur eine oder beide Lagerachsen 6 mit einem Formkörper 8 zu bestücken sind. Ebenso versteht es sich, daß die neue Lösung auch auf andere Fahrzeugausrüstungsteile mit schwenkbeweglicher Lagerung wie Klappen, Ascher oder Deckel mit Erfolg zu übertragen ist.

## Patentansprüche

1. Haltegriff für Fahrzeuge, bestehend aus einem U-förmig ausgebildeten Griffkörper (1), der einen Steg (2) und zwei Schenkel (3) umfaßt und, an den freien Schenkelenden (4) daran mittels Lagerachsen (6) angelenkte Lagerböcke (5) trägt, die an einer Fahrzeugkarosserie, im Übergangsbereich zwischen dem Dach und einer Seitenwand befestigbar sind, wobei der Griffkörper (1) aus einer eng an einer Befestigungsfläche anliegenden Nichtgebrauchslage gegen die Kraft einer Rückstellfeder (7) in eine von der Befestigungsfläche abstehenden Gebrauchslage schwenkbar ist und Mittel zur Verhinderung eines schlagartigen Bewegungsablaufs bei der Rückstellbewegung des Griffkörpers (1) vorgesehen sind, dadurch gekennzeichnet, daß der Haltegriff zum Abbremsen der Rückstellbewegung des Griffkörpers (1) mit zumindest einer Reibungsbremse ausgerüstet ist, die aus einem gegenüber der Lagerachse verdrehfest angeordneten Formkörper (8) aus verschleißfestem, zähelastischem Kunststoffmaterial besteht, welcher eine Bohrung (9) zur Aufnahme eines axialen Bereichs einer der Lagerachsen (6) aufweist, deren Durchmesser Kleiner als der Durchmesser der Lagerachse (6) ausgeführt ist, jedoch eine Relativbewegung zwischen Formkörper (8) und Lagerachse (6) zuläßt.

2. Haltegriff nach Anspruch 1, dadurch gekennzeichnet, daß der Formkörper (8) an einem der Lagerböcke (5) oder an einer diese miteinander verbindenden Profilschiene (11) angeordnet ist, wahrend die mit dem Formkörper (8) zusammenwirkende Lagerachse (6) verdrehfest am Griffkörper (1) sitzt.

3. Haltegriff nach Anspruch 1 oder 2, dadurch gekennzeichnet, daß die jeweils mit einem Formkörper (8) zusammenwirkenden Lagerachsen (6) eine glatte, korrosionsgeschützte Oberfläche aufweisen.

4. Haltegriff nach wenigstens einem der Ansprüche 1 bis 3, dadurch gekennzeichnet, daß der Formkörper (8) aus einem thermoplastischen Polyesterelastomer besteht.

## Claims

1. Handgrip for vehicles, composed of a U-shaped grip body (1) which comprises a web (2) and two legs (3) and, at the free leg ends (4), carries bearing blocks (5) which are articulated thereon by means of bearing spindles (6) and can be fastened on a vehicle body in the transition region between the roof and a side wall, it being possible for the grip body (1) to be pivoted, counter to the force of a restoring spring (7), out of a rest position, butting closely against a fastening surface, into a use position projecting away from the fastening surface, and provision being made for means for preventing an abrupt course of movement during the restoring movement of the grip body (1), characterized in that the handgrip is equipped, in order to brake the restoring movement of the grip body (1), with at least one friction brake composed of a moulding (8) which is arranged in a rotationally fixed manner with respect to the bearing spindle, consists of a wear-resistant, tough and resilient plastic material and exhibits a bore (9) for receiving an axial region of one of the bearing spindles (6), the diameter of said bore being configured to be smaller than the diameter of the bearing spindle (6), but permitting a relative movement between moulding (8) and bearing spindle (6).

2. Handgrip according to Claim 1, characterized in that the moulding (8) is arranged on one of the bearing blocks (5) or on a profile rail (11) which connects said bearing blocks to one another, while the bearing spindle (6) interacting with the moulding (8) is seated in a rotationally fixed manner on the grip body (1).

3. Handgrip according to Claim 1 or 2, characterized in that the bearing spindles (6) interacting in each case with a moulding (8) exhibit a smooth, corrosion-protected surface.

4. Handgrip according to at least one of Claims 1 to 3, characterized in that the moulding (8) consists of a thermoplastic polyester elastomer.

## Revendications

1. Poignée de véhicule automobile, constituée d'un corps (1) en U, qui comporte une traverse (2) et deux côtés (3) et qui porte, aux extrémités (4) libres des côtés, des supports d'appui (5) articulés sur celles-ci au moyen d'axes d'appui (6), lesquels supports peuvent être fixés sur la carrosserie d'un véhicule, dans la zone de transition entre le toit et une paroi latérale, le corps (1) de la poignée pouvant pivoter, à partir d'une position de non-utilisation, s'appliquant étroitement contre une surface de fixation, à l'encontre de la force d'un ressort de rappel (7), dans une position d'utilisation faisant saillie de la surface de fixation, et des moyens étant prévus pour empêcher un mouvement brusque lors du rappel du corps 1 de la poignée, caractérisée en ce que la poignée est équipée, pour freiner le mouvement de rappel du corps (1), d'au moins un frein à friction, qui est constitué d'un corps façonné (8), monté fixe en rotation par rapport à l'axe d'appui, réalisé dans une matière synthétique viscoplastique, résistant à l'usure, qui présente un trou (5) destiné à recevoir une zone axiale de l'un des axes d'appui (6), dont le diamètre est inférieur à celui de l'axe d'appui (6), mais qui autorise un déplacement relatif entre le corps façonné (8) et l'appui (6).

2. Poignée selon la revendication 1, caractérisé en ce que le corps façonné (8) est placé sur l'un des supports d'appui (5) ou sur un rail profilé (11), reliant ceux-ci entre eux, tandis que l'axe d'appui (6), coopérant avec le corps façonné (8), est placé solidaire en rotation sur le corps (1) de la poignée.

3. Poignée selon les revendications 1 ou 2, caractérisé en ce que les axes d'appui (6), coopérant chacun avec un corps façonné (8), présentent une surface lisse, protégée de la corrosion.

4. Poignée selon l'une au moins des revendications 1 à 3, caractérisé en ce que le corps façonné (8) est réalisé dans un élastomère de polyester thermoplastique.
